# EUROPÄISCHE PATENTSCHRIFT

(11) **EP 1 306 161 B1**
(45) Veröffentlichungstag und Bekanntmachung des Hinweises auf die Patenterteilung: **08.04.2009**
(21) Anmeldenummer: 02023766.5
(22) Anmeldetag: 24.10.2002
(51) Int. Cl.: B23Q 11/00, B23Q 11/08

(54) **Fräsmaschine mit einem Spanabsauggehäuse**
Milling machine with chip suctioning housing
Fraiseuse avec boîtier pour l'apsiration des copeaux

(30) Priorität: 24.10.2001 DE 10152401
(43) Veröffentlichungstag der Anmeldung: 02.05.2003
(73) Patentinhaber: Wissner, Rolf, Dipl.-Ing., 37079 Göttingen (DE)
(72) Erfinder: Wissner, Rolf, Dipl.-Ing., 37079 Göttingen (DE)
(74) Vertreter: Rehberg Hüppe + Partner

(56) Entgegenhaltungen:
- DE-A- 3 827 251
- DE-A- 4 218 247
- US-A- 3 788 423
- US-A- 4 364 695
- US-A- 4 822 219
- US-A- 4 915 550

## Beschreibung

Die Erfindung bezieht sich auf eine Fräsmaschine mit einem eine Spanabsaugkammer in seinem Inneren definierenden Spanabsauggehäuse, mit einer in die Spanabsaugkammer hinein ragenden Werkzeugspindel und mit an die Spanabsaugkammer angeschlossenen Luftführungeinrichtungen, wobei an dem freien Ende der Werkzeugspindel ein drehantreibbares Werkzeugfutter für ein spanabnehmendes Werkzeug vorgesehen ist, das beim Bearbeiten eines Werkstücks durch eine Werkzeugaustrittsöffnung hindurch über das Spanabsauggehäuse vorsteht, wobei das Spanabsauggehäuse beim Bearbeiten des Werkstücks auf einer Oberfläche des Werkstücks angeordnet und gemeinsam mit der Werkzeugspindel über die Oberfläche verfahrbar ist und wobei die Luftführungseinrichtungen beim Bearbeiten des Werkstücks eine Luftströmung durch die Spanabsaugkammer hervorrufen, die mit dem Werkzeug abgenommene Späne durch die Spanabsaugkammer abführt.

Eine Fräsmaschine der eingangs beschriebenen Art ist aus der DE 42 18 247 A bekannt. Hier mündet eine Absaugleitung der Luftführungseinrichtungen tangential in die Spanabsaugkammer ein, so dass in der Spanabsaugkammer eine die Späne führende Wirbelströmung um die Werkzeugspindel herum erzeugt wird. Das Spanabsauggehäuse wird mit geringem Abstand über der Oberfläche des zu bearbeitenden Werkstücks geführt, wobei ein ringförmiges Druckluftkissen um die Werkzeugaustrittsöffnung zwischen dem Spanabsauggehäuse und der Oberfläche des zu bearbeitenden Werkstücks ausgebildet werden kann. Hierzu ist an der dem Werkstück zugewandten Seite des Spanabsaugehäuses eine ringförmige Ausnehmung um die Werkzeugaustrittsöffnung herum vorgesehen. Die Werkzeugspindel tritt durch eine Durchtrittsöffnung in die Spanabsaugkammer in dem Spanabsauggehäuse ein, wobei der Innendurchmesser der Durchtrittsöffnung genau auf dem Außendurchmesser der Werkzeugspindel abgestimmt ist, so dass die Durchtrittsöffnung beim Bearbeiten des Werkstücks nahezu vollständig durch die Werkzeugspindel verschlossen wird. Die Höhe der Durchtrittsöffnung, d.h. die Wandstärke des Spanabsauggehäuses im Bereich der Durchtrittsöffnung ist aber nur gering, und eine echte Abdichtung zwischen der Werkzeugspindel und dem Spanabsauggehäuse ist nicht gegeben. Im Betrieb der bekannten Fräsmaschine ergibt sich, dass zwar die erzielte Luftströmung durch die Spanabsaugkammer, die im wesentlichen von der Werkzeugaustrittsöffnung zu der Absaugleitung führt, hinreichend definiert ist, um die mit dem Werkzeug von dem Werkstück abgenommenen Späne durch die Spanabsaugkammer abzuführen. Es ist auch ein gewisser Schutz vor dem rotierenden Werkzeug beim Bearbeiten des Werkstücks durch das Spanabsauggehäuse gegeben. Eine Verwendung der bekannten Fräsmaschine ohne eine geschlossene Abdeckhaube ist aber dennoch nicht unproblematisch, weil beim Bearbeiten des Werkstücks mit dem rotierenden Werkzeug gerade im hohen Drehzahlbereich eine starke Lärmemission verbunden ist, die sich in Form von Luftschall von dem Angriffsbereich des Werkzeugs an dem Werkstück ausbreitet. Eine geschlossene Abdeckhaube für eine Fräsmaschine hat aber verschiedene Nachteile. Neben zusätzlichem Konstruktions- und Kostenaufwand gehört hierzu, dass starke Beschränkungen für die Abmessungen des zu bearbeitenden Werkstücks resultieren, das vollständig innerhalb der Abdeckhaube angeordnet werden muss.

Aus der US-A-3,788,423 ist eine Absaugkammer zum Abdecken und Abdichten einer Bohrlochöffnung an einer Oberfläche beim Bohren eines Bohrlochs, Sprenglochs oder dgl. bekannt. Die Absaugkammer weist ein Gehäuse mit einer offenen Unterseite und einer geschlossene Oberseite auf, wobei die Oberseite mit einem Durchlass zur Aufnahme eines Schafts eines Bohrers versehen ist. Dieser Durchlass wird von einer Umfangsdichtung begrenzt. Weiterhin ist eine in die Absaugkammer führende Leitung zum Abführen von Staub und abgetragenem Material vorgesehen. Das Gehäuse der bekannten Absaugkammer wird mit an seinem unteren Rand überstehenden Abdichtmitteln an die jeweilige Oberfläche angesetzt, wodurch sich sein unterer Rand linienförmig um die Absaugkammer an die Oberfläche anpasst, um die Absaugkammer gegenüber der Oberfläche abzudichten. Mit der derart geschlossenen Absaugkammer soll die Lärmentwicklung während eines Bohrvorgangs reduziert werden. Das Gehäuse der bekannten Absaugkammer ist schalldämmend ausgekleidet. Für ein Fräswerkzeug, dessen Fräskopf häufig größer ist als der Durchmesser seines Schaftes und das mit sehr hoher Drehgeschwindigkeit angetrieben wird, ist die bekannte Absaugkammer weder vorgesehen noch geeignet. Auch zum Verfahren Ober die Oberfläche,- an die sie angedrückt wird, ist sie weder vorgesehen noch geeignet.

Der Erfindung liegt daher die Aufgabe zugrunde, eine Fräsmaschine der eingangs beschriebenen Art aufzuzeigen, die das Austreten von Lärmemission auch ohne eine geschlossene Abdeckhaube hinreichend verhindert.

Erfindungsgemäß wird diese Aufgabe durch die Merkmale des Patentanspruchs 1 gelöst.

Bei der neuen Fräsmaschine ist es entscheidend, dass die Luftströmung durch die Spanabsaugkammer nicht nur irgendwie von den Luftführungseinrichtungen dominiert wird. Vielmehr ist die Spanabsaugkammer bis auf die Anschlüsse der Luftführungseinrichtungen und die Werkzeugaustrittsöffnung tatsächlich abgedichtet. Diese Abdichtung ist so ausgeführt, dass ein Austreten von Luftschall aus der Spanabsaugkammer verhindert wird. Dies bedeutet auch, dass die Wandungen des Spanabsauggehäuses so ausgebildet sind, dass sie den Luftschall im Inneren der Spanabsaugkammer halten und nicht durchlassen. Es versteht sich, dass dies nicht für Luftschall aller Frequenzen gilt. Es geht primär um den Luftschall in dem Frequenzbereich, der potentiell die für den Betrieb von Fräsmaschinen einzuhaltenden Lärmemissionsgrenzen überschreitet. Dass es überhaupt möglich ist, durch eine Abdichtung der Spanabsaugkammer gegenüber dem Austreten von Luftschall die Lärmemission der gesamten Fräsmaschine bis unter einzuhaltende Grenzwerte abzusenken, beruht auf der Erkenntnis, dass sich der durch den Angriff des Werkzeugs an dem zu bearbeitenden Werkstück angeregte Luftschall zunächst im wesentlichen in der Spanabsaugkammer ausbreitet. Dies gilt natürlich nur dann, wenn die Spanabsaugkammer bzw. das Spanabsauggehäuse auf der Oberfläche des Werkstücks angeordnet ist, so dass der Luftschall nicht seitlich zwischen der Oberfläche des Werkstücks und dem Spanabsauggehäuse entweichen kann. Hierfür kann aber auf relativ einfache Weise gesorgt werden. Um die Luftschallisolierung der Spanabsaugkammer nicht durch die Luftführungseinrichtungen zunichte zu machen, müssen bei der neuen Fräsmaschine zwischen jedem Anschluss der Luftführungseinrichtungen und der Umgebung des Spanabsauggehäuses schalldämpfende und/oder schalldämmende Mittel angeordnet sein. Hierbei kann es sich um sowieso in Luftabsaug- oder Lufteinblasleitungen vorhandene Einrichtungen handeln, die als Schalldämpfer für Luftschall aus der Spanabsaugkammer wirken. Bei einer Einblasleitung mit kleinem Durchmesser, beispielsweise für einen Kühlnebel für das an dem Werkstück angreifende Werkzeug, kann auch die Tatsache bereits ausreichend sein, dass durch den kleinen Querschnitt und bei der vorhandenen Gegenströmung kein Luftschall austreten wird. Zu den schalldämpfenden und/oder schalldämmenden Mitteln zwischen dem Anschluss der Luftführungseinrichtungen an die Spanabsaugkammer und der Umgebung des Spanabsauggehäuses gehört es auch, Luft von einem entfernten Ort einzusaugen bzw. an einem solchen entfernten Ort auszublasen, an dem das Austreten von Luftschall aus der Spanabsaugkammer unkritisch ist, weil sich der Ort beispielsweise in einem schallgedämmten Raum befindet.

Die Abdichtung des Spanabsauggehäuses gegenüber der Oberfläche des Werkstücks, um dazwischen ein Austreten von Luftschall zu verhindern, wird durch einen an der Außenseite des Spanabsauggehäuses um die Werkzeugaustrittsöffnung herum angeordneten Niederhaltering bewirkt , über den sich das Spanabsauggehäuse beim Bearbeiten des Werkstücks an dessen Oberfläche flächig abstützt. Dabei ist der Begriff Niederhaltering so zu verstehen, dass der Niederhaltering durchaus mit einer gewissen Abstützkraft an der Oberfläche des Werkstücks anliegt. Er kann damit auch dazu beitragen, das Werkstück auf einer Unterlage niederzuhalten, woraus sein Name resultiert. Dieses Niederhalten ist auch eine Maßnahme zur Unterdrückung von Schwingungen des Werkstücks und damit zur Unterdrückung der Anregung von Luftschall durch das Werkstück.

Wichtig dabei ist, dass die Abstützkraft des Niederhalterings flächig auf der Oberfläche des Werkstücks verteilt wird. Dies hat zum einen den Grund, eine Beschädigung der Oberfläche des Werkstücks durch den mit der Abstützkraft niedergedrückten Niederhaltering zu verhindern. Darüberhinaus führt die flächige Abstützung zu einer besseren Abdichtung zwischen dem Spanabsauggehäuse und der Oberfläche des Werkstücks gegenüber dem einzudämmenden Luftschall. Eine umlaufende Abstützfläche des Niederhalterings weist hierzu eine Breite von mindestens 10 mm auf. Vorzugsweise beträgt ihre Breite mindestens 30 mm.

Da sich das Spanabsauggehäuse nicht nur über den Niederhaltering an der Oberfläche des Werkstücks abstützt, sonder mit dem Niederhaltering über die Oberfläche des Werkstücks verfahren wird, sind Maßnahmen zu treffen, die verhindern, dass die Oberfläche des Werkstücks durch den Niederhaltering zerkratzt wird. Hierzu gehört die bereits erwähnte flächige Anlage des Niederhalterings an der Oberfläche des Werkstücks. Hierzu gehört aber auch eine möglichst glatte Abstützfläche des Niederhalterings. Bevorzugt ist eine polierte Edelstahloberfläche, wobei Edelstahl deshalb bevorzugt ist, weil neben dem Niederhaltering selbst auch die Glattheit der Oberfläche eine gute Haltbarkeit aufweist.

Besonders bevorzugt ist es, wenn sich die Abstützfläche des Niederhalterings beim Bearbeiten des Werkstücks über einen Film eines Fluidums, beispielsweise einen Druckluftfilm oder einen Schmiermittelfilm, auf der Oberfläche des Werkstücks abstützt. Auch im Falle eines Druckluftfilms handelt es sich hierbei nicht um ein zwischen den Niederhaltering und der Oberfläche des Werkstücks ausgedehntes Druckluftkissen, das für die Eindämmung des Luftschalls nachteilig wäre. Es geht vielmehr um einen Film von typischerweise weniger als ein 1 mm Dicke. Vorzugsweise ist der Film von der Größenordnung 1/10 mm bis 5/10 mm Höhe. Das heißt der Film ist gerade so dick, dass er die Reibung zwischen den Niederhaltering und der Oberfläche des Werkstücks effektiv herabsetzt. Dies bedeutet auch einen Schutz der Übertragung von Körperschall von dem Werkstück auf das Spanabsauggehäuse. Die maximale Dicke des Films, die der Schallschutzfunktion des Niederhalterings nicht entgegen steht, hängt von der Breite der Abstützfläche und dem verwandten Fluidum ab. Besonders bevorzugt ist es, wenn der Druckluftfilm nicht über einen großflächigen offenen Kanal an der dem Werkstück zugewandten Abstützfläche des Niederhalterings aufgebaut wird, sondern hierfür nur einzelne lokale Durchbrechungen vorgesehen sind, durch die das Fluidum aus der Abstützfläche des Niederhalterings austritt.

Als zusätzliche Maßnahme neben der begrenzten Dicke des Films, um das Austreten von Luftschall über den Film zu verhindern, können die Luftführungseinrichtungen den Film beim Bearbeiten des Werkstücks zumindest teilweise in die Spanabsaugkammer absaugen. Hierdurch wird zusätzlich ein Sperrsystem für feine Späne aufgebaut, die potentiell zwischen das Spanabsauggehäuse und die gegenüberliegende Oberfläche des Werkstücks gelangen könnten. Ein weiterer Nebeneffekt ist, dass auch größere Späne des Werkstücks, die in einem Fräskanal zurückgeblieben sein mögen, doch noch in die Spanabsaugkammer geblasen werden können.

Aufgrund seines geringen Abstands zu der Oberfläche des Werkstücks hinab bis weniger als 1/10 mm ist es bevorzugt, wenn der Niederhaltering schwimmend an dem Spanabsauggehäuse gelagert ist. Er kann sich damit unabhängig von auftretenden Toleranzen immer genau parallel zu der Oberfläche des Werkstücks um den Angriffspunkt des Werkzeugs einstellen.

Um ein seitliches Anstoßen des flach auf der Oberfläche des Werkstücks aufliegenden Niederhalterings auch an nur niedrigen Hindernisse zu verhindern, kann der Niederhaltering in seinem Randbereich oder ein angrenzender Bereich des Spanabsauggehäuses flach gegenüber der Oberfläche des Werkstücks ansteigen. Kleinere Hindernisse, wie beispielsweise hochstehende Werkstücke, können so auf die Auflagefläche niedergedrückt und damit beseitigt werden.

Um eine möglichst gleichbleibende Abstützkraft des Niederhalterings an der Oberfläche des Werkstücks zu realisieren, kann diese Abstützkraft durch eine Masse und/oder eine Feder definiert werden. Dabei bietet sich die Masse des Spanabsauggehäuses an. Es kann aber auch ein zusätzliches Tariergewicht verwendet werden. Um die Masse des Spanabsauggehäuses für die Abstützkraft nutzen zu können, versteht es sich, dass das Spanabsauggehäuse von der Oberfläche des Werkstücks weg nach oben frei verschieblich zu lagern ist. Dies bedeutet umgekehrt, dass die Werkzeugspindel beim Bearbeiten des Werkstücks senkrecht zu der Oberfläche des Werkstücks zumindest begrenzt gegenüber dem auf der Oberfläche angeordneten Spanabsauggehäuse verfahrbar ist, ohne dass die Abdichtung der Spanabsaugkammer verlorengeht. Dieses Merkmal ist auch erforderlich, um unterschiedliche Einstechtiefen des Werkzeugs in das Werkstück bei gleicher Einspannung des Werkzeugs zu realisieren, und kann beispielsweise dadurch realisiert werden, dass an der Werkzeugspindel ein Schallschutzkragen gelagert ist, von dem eine umlaufende Feder auf die Oberfläche des Werkstücks hin absteht, die in eine umlaufende Nut in einer Wanne des Spanabsauggehäuses eingreift. Der maximale Eingriff der Feder in die Nut und der minimale Eingriff, bei dem noch die Abdichtung der Spanabsaugkammer gegenüber dem Austreten von Luftschall erzielt wird, definieren den zulässigen Verfahrbereich der Werkzeugspindel gegenüber dem Spanabsauggehäuse beim Bearbeiten des Werkstücks.

Die Luftführungseinrichtungen können bei der neuen Fräsmaschine eine im Bereich der Werkzeugaustrittsöffnung angeschlossene Druckluftleitung umfassen, um einen Schmier- und Kühlnebel auf das Werkzeug auszublasen. Hierbei kann es sich, ggf. neben dem Druckluftfilm zwischen dem Niederhaltering und der Oberfläche des Werkstücks, um die einzige Luftzufuhr in die Spanabsaugkammer handeln.

Weiterhin können die Luftführungseinrichtungen eine im Bereich ihres größten Durchmessers an die Spanabsaugkammer angeschlossene Absaugleitung umfassen. Bei der Erfindung kommt es nicht darauf an, dass in der Spanabsaugkammer eine Wirbelströmung um die Werkzeugspindel herum hervorgerufen wird. Auch andere Durchströmungen der Spanabsaugkammer sind möglich, solange die Durchströmung der Spanabsaugkammer sicher dafür sorgt, dass die mit dem Werkzeug von dem Werkstück abgenommenen Späne zuverlässig abgeführt werden. Um tote Bereiche der Absaugung zu vermeiden, ist es aber dennoch sinnvoll, die Absaugleitungen der Luftführungseinrichtungen im Bereich des größten Durchmessers der Spanabsaugkammer anzuschließen.

Die bereits angesprochenen schalldämpfenden und/oder schalldämmenden Mittel zwischen den Anschlüssen der Luftführungseinrichtungen und der Umgebung des Spanabsauggehäuses können einen Schalldämpfer und/oder eine Luftansaugung- und/oder -ausblasung an einem von der Umgebung des Spanabsauggehäuses entfernten Ort umfassen.

Um die Betriebssicherheit der neuen Fräsmaschine weiter zu erhöhen, kann am Außenumfang des Spanabsauggehäuses ein umlaufender Druckschlauch angeordnet sein, wobei ein Drucksensor für einen Druckanstieg aufgrund eines Zusammendrückens des Druckschlauchs vorgesehen ist. Aufgrund des Signals des Drucksensors kann die Fräsmaschine angehalten werden. So wird verhindert, dass die Fräsmaschine soweit gegen ein Hindernis gefahren wird, dass es zu einem gefährlichen Unfall kommt. Dabei zählt in diesem Zusammenhang auch ein Körperteil eines Bedieners der Fräsmaschine als Hindernis.

Die Erfindung wird im folgenden anhand eines Ausführungsbeispiels näher erläutert und beschrieben, dabei zeigt:
- Fig. 1: die neue Fräsmaschine bei angehobener Werkzeugspindel im vertikalen Längsschnitt,
- Fig. 2: die neue Fräsmaschine bei zum Bearbeiten eines Werkstücks abgesenkter Werkzeugspindel, ebenfalls im vertikalen Längsschnitt, und
- Fig. 3: ein vergrößertes Detail von Fig. 2.

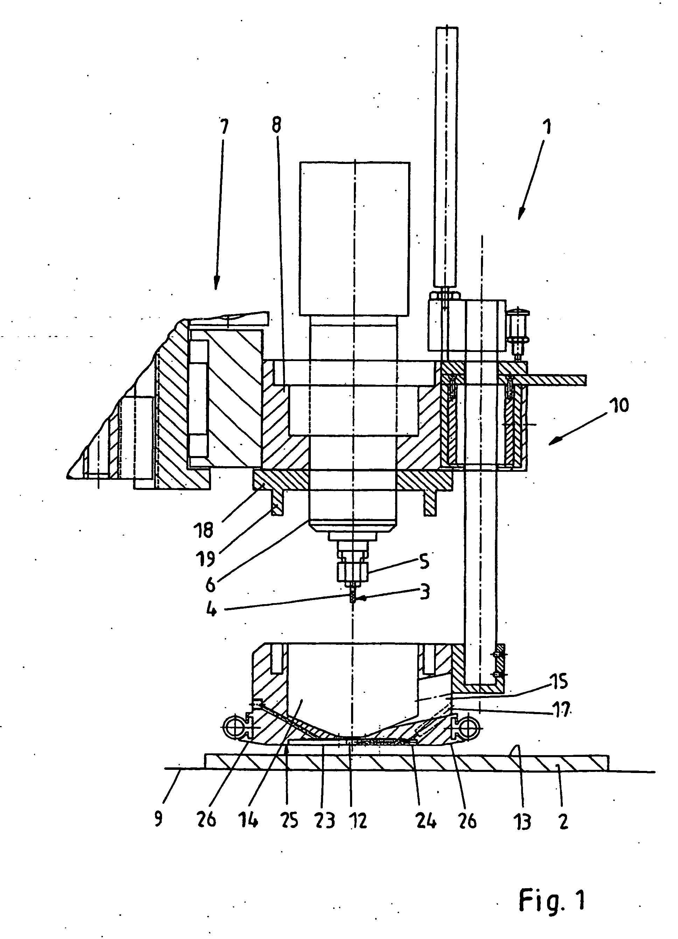

Die in Fig. 1 in ihren wesentlichen Bestandteilen dargestellte Fräsmaschine 1 dient zur Bearbeitung eines Werkstücks 2 mit einem Werkzeug 3, beispielsweise einem Fräser 4, für den ein drehantreibbares Werkzeugfutter 5 einer Werkzeugspindel 6 vorgesehen ist. Zum Verfahren der Werkzeugspindel 6 sind Verfahreinrichtungen 7 vorgesehen. Mit den Verfahreinrichtungen 7 ist eine Spindelhalterung 8 in der Ebene einer Auflagefläche 9 für das Werkstück 2 und senkrecht dazu verfahrbar. Näher wird hier auf die Verfahreinrichtungen 7 nicht eingegangen werden, da ihre Details für die vorliegende Erfindung nicht von Bedeutung sind. An der Spindelhalterung 8 und mit dieser verfahrbar ist eine Führung 10 für ein Spanabsauggehäuse 11 gelagert. Die Führung 10 ermöglicht es dabei, die Werkzeugspindel 6 mit dem Werkzeug 3 gegenüber dem Spanabsauggehäuse 11 soweit abzusenken, dass das Werkzeug 3 durch eine Werkzeugaustrittsöffnung 12 wieder aus dem Spanabsauggehäuse 11 heraustritt. Die Werkzeugspindel 6 kann nach oben aus dem Spanabsauggehäuse 11 auch wieder herausgefahren werden, um beispielsweise das Werkzeug 3 zu wechseln. Wenn die Werkzeugspindel weiter von der Auflagefläche 9 weg nach oben verfahren wird, wird das Spanabsauggehäuse 11, das beim Bearbeiten des Werkstücks 2 auf dessen Oberfläche 13 aufliegt, von der Oberfläche 13 weg angehoben, um beispielsweise das Werkstück 2 zu wechseln oder einen anderen Bearbeitungspunkt an demselben Werkstück 2 anzufahren.

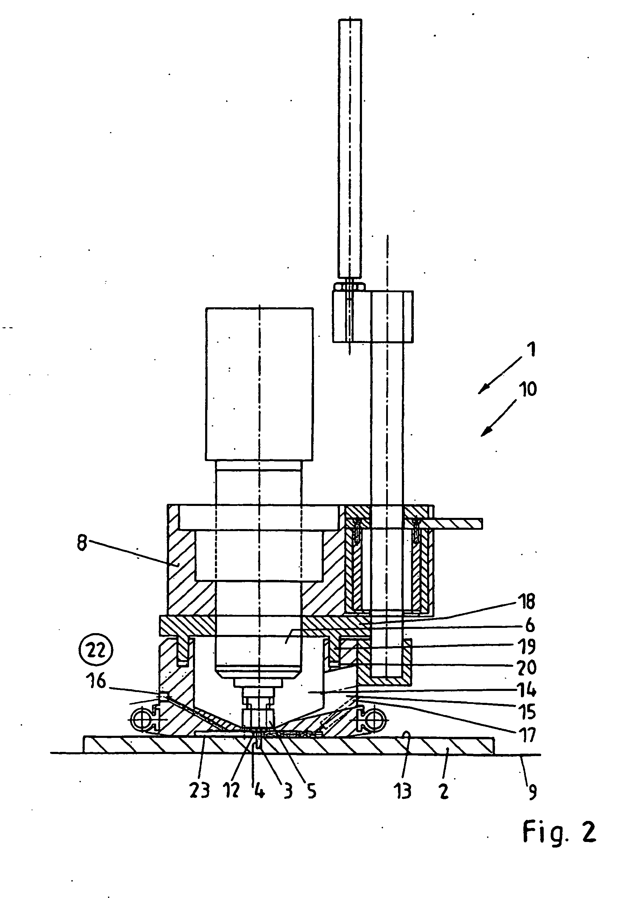

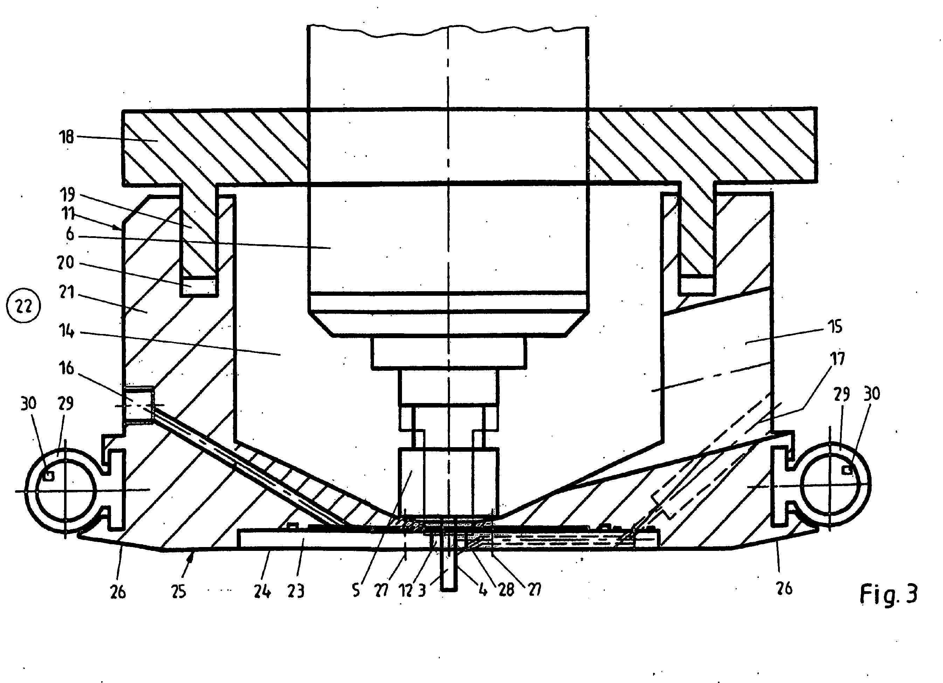

Während Fig. 1 zeigt, wie die Spindelhalterung 8 soweit über die Auflagefläche 9 angehoben ist, dass sich auch das Spanabsauggehäuse 11 oberhalb der Oberfläche 13 befindet, zeigt Fig. 2 die Betriebsstellung beim Bearbeiten des Werkstücks 2 mit dem Werkzeug 3, und Fig. 3 gibt als vergrößertes Detail das Spanabsauggehäuse 11 mit der hereinragenden Werkzeugspindel 6 in der Betriebsstellung gemäß Fig. 2 wieder.

In dieser Betriebsstellung ist eine Spanabsaugkammer 14 im Inneren des Spanabsauggehäuses 11 bis auf die Werkzeugaustrittsöffnung 12 und Anschlüsse 15 bis 17 nicht nur geschlossen, sondern gegenüber dem Austreten von Luftschall abgedichtet. Zu diesem Zweck ist an der Werkzeugspindel 6 unterhalb der Spindelhalterung 8 ein Schallschutzkragen 18 angebracht. Von dem Schallschutzkragen 18 steht auf die Auflagefläche 9 hin eine umlaufende Feder 19 vor. Die Feder 19 greift in eine umlaufende Nut 20 in einer Wanne 21 des Spanabsauggehäuses 11 ein. Trotz eines minimalen Spiels zwischen dem Schallschutzkragen 18 und der Wanne 21 im Bereich ihrer Nut und Feder-Verbindung verhindern der meanderförmige Verlauf des Fügebereich und die geringe Größe eines verbleibenden Luftdurchtritts das Austreten von Luftschall zwischen dem Schallschutzkragen 18 und der Wanne 21. Auffällig ist auch, dass sowohl der Schallschutzkragen 18 als auch die Wanne 21 starkwandig ausgebildet sind, damit keine direkte Durchlässigkeit für Luftschall gegeben ist. Ein Austreten von Luftschall durch die Anschlüsse 15 bis 17 in die Umgebung 22 des Spanabsauggehäuses 11 wird durch hier nicht dargestellte schalldämpfende und/oder schalldämmende Mittel erreicht. Hierbei kann es sich um Schalldämpfer, Schalldrosseln oder auch einfach eine Öffnung von an die Anschlüsse 15 bis 17 angeschlossenen Leitungen an einem entfernten Ort handeln, an dem der Austritt von Luftschall unbedenklich ist.

Der Luftschall, der in der Spanabsaugkammer 14 gehalten werden soll, wird durch den Angriff des mit hoher Drehzahl rotierenden Werkzeugs 3 an dem zu bearbeitenden Werkstück 2 erzeugt. Wenn das Spanabsauggehäuse 11 aber auf der Oberfläche 13 des Werkstücks 2 aufliegt, und verhindert wird, dass zwischen dem Spanabsauggehäuse 21 und der Oberfläche 13 Luftschall seitlich entweicht, ist die Spanabsaugkammer 14 der Ort, über den sich der Luftschall weiter ausbreitet. D.h., wenn verhindert wird, dass sich der Luftschall 14 aus der Spanabsaugkammer 14 in die Umgebung 22 des Spanabsauggehäuses 21 ausbreitet, kann die Lärmemission, die durch das Bearbeiten des Werkstücks 2 mit der Fräsmaschine 1 potentiell verursacht wird, stark begrenzt werden. Tatsächlich ist eine Begrenzung um 20 dBa ohne weiteres realisierbar. Um das Entweichen von Luftschall zwischen der Oberfläche 13 des Werkstücks 2 und dem Spanabsauggehäuse 21 zu verhindern, stützt sich das Spanabsauggehäuse 21 über einen Niederhaltering 23 großflächig an der Oberfläche 13 ab. Die Abstützfläche 24 des Niederhalterings ist hier überall breiter als 50 mm. Diese relativ große Breite der Abstützfläche 24 verlängert den potentiellen Weg, den Luftschall zwischen der Oberfläche 13 und dem Niederhaltering 23 zurücklegen müsste, um seitlich zu entweichen. Darüberhinaus sorgt diese relativ große Fläche für eine geringe Flächenpressung aufgrund des sich mit seiner Masse an der Oberfläche 13 abstützenden Spanabsauggehäuses 21. Um beim Verfahren des Spanabsauggehäuses 21 mit der Werkzeugspindel 6 über die Oberfläche 13 des Werkstücks 2 ein Verkratzen der Oberfläche 13 vollständig zu verhindern, sind noch weitere Maßnahmen vorgesehen. So ist die Abstützfläche 24 glatt poliert. Weiterhin ist der Niederhaltering 23 an der Wanne 21 schwimmend gelagert, so dass er kleineren Unebenheiten der Oberfläche 13 oder anderen auftretenden Toleranzen zu folgen vermag. Außerdem ist die Unterseite 25 des Spanabsauggehäuses 11 in ihrem Randbereich mit einem leichten Anstieg 26 versehen, die auftretende Hindernisse, beispielsweise in Form von nicht flach auf der Auflagefläche 9 aufliegenden Werkstücken sanft nach unten drückt, bevor sie von der Abstützfläche 24 fest an die Auflagefläche 9 angedrückt werden. Letztlich sind in dem Niederhaltering 23 feine Bohrungen 27 vorgesehen, die über den Anschluss 16 mit einer hier nicht dargestellten Druckluftquelle in Verbindung stehen. Aus den Bohrungen 27 austretende Druckluft bildet zwischen dem Niederhaltering 23 und der Oberfläche 13 einen Druckluftfilm aus, der zwar nur dünn ist, aber die Reibung zwischen dem Spanabsauggehäuse 11 und dem Werkstück 2 doch erheblich reduzieren kann und das Spanabsauggehäuse 21 von Schwingungen des Werkstücks 2 entkoppelt. Die über den Anschluss 16 zur Verfügung gestellte Druckluft kann auch verwendet werden, um die schwimmende Abstützung des Niederhalterings 23 an der Wanne 21 des Spanabsauggehäuses 11 zu realisieren. Der Druckluftfilm zwischen der Oberfläche 13 und der Abstützfläche 24 des Niederhalterings 23 ist so dünn, dass er für das Durchtreten von Luftschall ungeeignet ist. Darüberhinaus wird eine an den Anschluss 15 angeschlossene Absaugeinrichtung, die wie die Druckluftquelle an dem Anschluss 16 Bestandteil der Luftführungseinrichtungen ist, beim Bearbeiten des Werkstücks 2 ein so großer Unterdruck in der Spanabsaugkammer 14 hervorgerufen, dass der Druckluftfilm zumindest teilweise in die Spanabsaugkammer eingesogen wird. Dies bedeutet nicht nur eine Gegenströmung zu in den Druckluftfilm eindringendem Luftschall, sondern es wird auch verhindert, dass von dem Werkstück 2 mit dem Werkzeug 3 abgetragenes Material zwischen das Spanabsauggehäuse 11 und die Oberfläche 13 gelangt. Darüberhinaus wird ein beim Bearbeiten des Werkstücks 2 erzeugter Fräskanal so durchblasen, dass darin ggf. verbliebene Späne in die Spanabsaugkammer 14 gespült werden. Der Hauptstrom von Spänen, die das Werkzeug 3 von dem Werkstück 2 abträgt, wird von einer Strömung durch die Spanabsaugkammer 14 geführt, die von einem Kühl- und Schmierstoffnebel, d.h. einem Kühl- bzw. Schmierstoffaerosol, gespeist wird, der über den Anschluss 17 bereitgestellt wird und durch eine auf das Werkzeug 3 gerichtete Ausblasöffnung 28 austritt. Die so bereitgestellten Luftmengen werden mit dem verbrauchten Kühl- bzw. Schmiermittel und den Spänen durch den Anschluss 15 in die bereits angesprochene Absaugleitung abgesaugt. Durch die Kombination der Abdichtung der Spanabsaugkammer 14 zu der Werkzeugspindel 6 hin mit der gezielten Luftführung wird bei der neuen Fräsmaschine 1 tatsächlich eine solche Reduktion der Luftschallemission in die Umgebung 22 erreicht, dass die Fräsmaschine 1 ohne eine Abdeckhaube betreibbar ist. Um dabei neben der Lärmemission auch eine Verletzungsgefahr beim Verfahren der Werkzeugspindel 6 oder gar eine Verletzungsgefahr durch das Werkzeug 3 auszuschließen, sind weitere Maßnahmen getroffen. So läuft um das Spanabsauggehäuse 21 in seinem unteren Bereich ein Druckschlauch 29 um, dessen Inneren ein hier nur schematisch dargestellter Drucksensor 30 zugeordnet ist. Wenn das Spanabsauggehäuse 21 seitlich irgendwo anschlägt, erhöht sich der Druck im Inneren des Druckschlauchs 29, was von dem Drucksensor 30 detektiert wird. Die Steuerung der Fräsmaschine 1 schaltet auf das Sensorsignal hin die Verfahreinrichtungen 7 gemäß Fig. 1 ab. Hierdurch wird die bereits angesprochene Verletzungsgefahr durch die Fräsmaschine 1 reduziert, aber auch eine Beschädigung der Fräsmaschine 1 selbst, wenn sie gegen ein festes Hindernis zu fahren droht. Außerdem kann eine Druck- oder Mikroschalter registrieren, ob der schwimmend gelagerte Niederhaltering 23 sich an der Oberfläche 13 des Werkstücks 2 abstützt oder von dem Spanabsauggehäuse 21 gehalten werden muss. Letzterer Fall weist darauf hin, dass das Werkzeug 3 ungeschützt über das Spanabsauggehäuse 21 vorsteht. Es versteht sich, dass weitere Sicherheitsmaßnahmen dafür sorgen können, dass das Werkzeug 3 mit der Werkzeugspindel 6 überhaupt nur dann angetrieben wird, wenn die Werkzeugspindel 6 in die Absaugkammer 14 eintaucht. Dennoch kann das Werkzeug 3 schon vor seinem Eingreifen in das Werkstück 2 in Rotation versetzt werden, weil die in die Nut 20 eingreifende Feder 19 ein Abdichten der Spanabsaugkammer 14 auch bei unterschiedlichen Relativpositionen des Werkzeugs 3 zu der Auflagefläche 24 des Niederhalterings 23 sicherstellt. So kann das Werkzeug 3 beim Bearbeiten des Werkstücks 3 auch unterschiedlich tief in das Werkstück 2 eingreifen, ohne dass dies die Funktion der Vorrichtung 1 bezüglich der Reduzierung von Schallemission oder der Erhöhung der Verletzungsicherheit beeinträchtigt. Erst wenn das Werkzeug 3 soweit in die Spanabsaugkammer 14 angehoben wurde, dass es das Werkstück 2 nicht mehr erreicht, d.h. auch kein Luftschall mehr angeregt werden kann, mag die Abdichtung durch die in die Nut 20 eingreifende Feder 19 zurückgehen.

### BEZUGSZEICHENLISTE

- 1 -: Fräsmaschine
- 2 -: Werkstück
- 3 -: Werkzeug
- 4 -: Fräser
- 5 -: Werkzeugfutter
- 6 -: Werkzeugspindel
- 7 -: Verfahreinrichtungen
- 8 -: Spindelhalterung
- 9 -: Auflagefläche
- 10 -: Führung

- 11 -: Spanabsauggehäuse
- 12 -: Werkzeugaustrittsöffnung
- 13 -: Oberfläche
- 14 -: Absaugkammer
- 15 -: Anschluss
- 16 -: Anschluss
- 17 -: Anschluss
- 18 -: Schallschutzkragen
- 19 -: Feder
- 20 -: Nut

- 21 -: Wanne
- 22 -: Umgebung
- 23 -: Niederhaltering
- 24 -: Abstützfläche
- 25 -: Unterseite
- 26 -: Anstieg
- 27 -: Bohrung
- 28 -: Ausblasöffnung
- 29 -: Druckschlauch
- 30 -: Drucksensor

## Patentansprüche

1. Fräsmaschine (1) mit einem eine Spanabsaugkammer (14) in seinem Inneren definierenden Spanabsauggehäuse (11), mit einer in die Spanabsaugkammer (14) hinein ragenden Werkzeugspindel (6) und mit an die Spanabsaugkammer (14) angeschlossenen Luftführungseinrichtungen, wobei an dem freien Ende der Werkzeugspindel (6) ein drehantreibbares Werkzeugfutter (5) für ein spanabnehmendes Werkzeug (3) vorgesehen ist, das beim Bearbeiten eines Werkstücks (2) durch eine Werkzeugaustrittsöffnung (12) hindurch über das Spanabsauggehäuse (11) vorsteht, wobei das Spanabsauggehäuse (11) beim Bearbeiten des Werkstücks (2) auf einer Oberfläche (13) des Werkstücks (2) angeordnet und gemeinsam mit der Werkzeugspindel (6) über die Oberfläche (13) verfahrbar ist und wobei die Luftführungseinrichtungen beim Bearbeiten des Werkstücks (2) eine Luftströmung durch die Spanabsaugkammer (14) hervorrufen, die mit dem Werkzeug (3) abgenomnene Späne durch die Spanabsaugkammer (14) abführt, **dadurch gekennzeichnet, dass** die Spanabsaugkammer (14) beim Bearbeiten des Werkstücks (2) bis auf die Werkzeugaustrittsöffnung (12) und Anschlüsse (15-17) der Luftführungseinrichtungen gegenüber dem Austreten von Luftschall abgedichtet ist, wobei zwischen jedem Anschluss (15-17) der Luftführungseinrichtungen und der Umgehung (22) des Spanabsauggehäuses (11) schalldämpfende und/oder -dämmende Mittel angeordnet sind und dass an der Außenseite des Spanabsauggehäuses (11) ein Niederhaltering (23) um die Werkzeugaustrittsöffnung (12) angeordnet ist, über den sich das spanabsauggehäuse (11) beim Bearbeiten des Werkstücks (2) an dessen Oberfläche (13) flächig abstützt.

2. Fräsmaschine nach Anspruch 1, **dadurch gekennzeichnet, dass** eine umlaufende Abstützfläche (24) des Niederhalterings (23) eine Bereite von mindestens 10 mm, vorzugsweise von mindestens 30 mm, aufweist.

3. Fräsmaschine nach Anspruch 1 oder 2, **dadurch gekennzeichnet, dass** die Abstützfläche (24) eine polierte Edelstahloberfläche ist.

4. Fräsmaschine nach einem der Ansprüche 1 bis 3, **dadurch gekennzeichnet, dass** sich die Abstützfläche (24) beim Bearbeiten des Werkstücks (2) übers einen Film aus unter Druck stehendem Fluidum an dessen Oberfläche (13) abstützt.

5. Fräsmaschine nach Anspruch 4, **dadurch gekennzeichnet, dass** der Film aus unter Druck stehendem Fluidum über einzelne lokale Durchbrechungen (27) in der Abstützfläche (24) aufgebaut wird, durch die das Fluidum aus der Abstützfläche (24) des Niederhalterings (23) austritt.

6. Fräsmaschine nach Anspruch 4 oder 5, **dadurch gekennzeichnet, dass** die Luftführungseinrichtungen den Film beim Bearbeiten des Werkstücks (2) zumindest teilweise in die Spanabsaugkammer (14) absaugen.

7. Fräsmaschine nach einem der Ansprüche 1 bis 6, **dadurch gekennzeichnet, dass** der Niederhaltering (23) schwimmend an dem Spanabsauggehäuse (11) gelagert ist.

8. Fräsmaschine nach einem der Ansprüche 1 bis 7, **dadurch gekennzeichnet, dass** der Niederhaltering (23) in seinem Randbereich oder ein angrenzender Bereich des Spanabsauggehäuses (11) flach gegenüber der Oberfläche (13) des Werkstücks (2) ansteigt.

9. Fräsmaschine nach einem der Ansprüche 1 bis 8, **dadurch gekennzeichnet, dass** eine Abstützkraft des Niederhalterings (23) an der Oberfläche (13) des Werkstücks (2) durch die Masse des Spanabsauggehäuses (11) und/oder die Masse eines Tariergewichts definiert wird.

10. Fräsmaschine nach einem der Ansprüche 1 bis 9, **dadurch gekennzeichnet, dass** die Werkzeugspindel (6) beim Bearbeiten des Werkstücks (2) senkrecht zu der Oberfläche (13) des Werkstücks (2) begrenzt gegenüber dem auf der Oberfläche (13) angeordneten Spanabsauggehäuse (11) herfahrbar ist, ohne dass die abdichtung der Spanabsaugkammer (14) verloren geht.

11. Fräsmaschine nach Anspruch 10, **dadurch gekennzeichnet, dass** an der Werkzeugspindel (6) ein Schallschutzkragen (18) gelagert ist, von dem eine umlaufende Feder (19) absteht, die in eine umlaufende Nut (20) in einer Wanne (21) des spanabsauggehäuses (11) eingreift.

12. Fräsmaschine nach einem der Ansprüche 1 bis 11, **dadurch gekennzeichnet, dass** die Luftführungseinrichtungen eine im Bereich der werkzeugaustrittsöffnung (12) angeschlossene Druckluftleitung umfassen, um einen Schmier- und Kühlnebel auf das Werkzeug (3) auszublasen.

13. Fräsmaschine nach einem der Ansprüche 1 bis 12, **dadurch gekennzeichnet, dass** die Luftführungseinrichtungen eine im Bereichihres größten Durchmessers an die Spanabsaugkammer (14) angeschlossene Absaugleitung umfassen.

14. Fräsmaschine nach einem der Ansprüche 1 bis 13, **dadurch gekennzeichnet, dass** die schalldämpfenden und/oder schalldämmenden Mittel einen Schalldämpfer und/oder eine Luftansaugung- und/oder -aufblasung an einem von der Umgebung des spanabsauggehäuses (22) entfernten Ort umfassen.

15. Fräsmaschine nach einem der Ansprüche 1 bis 14, **dadurch gekennzeichnet, dass** am Außenumfang des Spanabsauggehäuses (11) ein umlaufender Druckschlauch (29) angeordnet ist, wobei ein Drucksensor für einem Druckanstieg aufgrund eines Zusammendrückens des Druckschlauchs (29) vorgesehen ist.

## Claims

1. Milling machine (1) having a chip suction housing (11) defining a chip suction chamber (14) in its interior, a tool spindle (6) protruding into the chip suction chamber (14), and air guiding devices, wherein a rotationally drivable tool chuck (5) for a tool (3) which cuts by chip removal and which protrudes through a tool exit opening (12) over the chip suction housing (11) in processing a work piece is provided at the free end of the tool spindle (6), wherein the chip suction housing (11) is arranged on a surface (13) of the work piece (2) and is movable together with the tool spindle (6) over the surface (13) in processing the work piece (2), and wherein the air guiding devices generate an airflow through the chip suction chamber (14) in processing the work piece (2), which discharges the chips removed by the tool (3) through the chip suction chamber (14), **characterized in that** the chip suction chamber (14), in processing the work piece (2), is sealed with regard to the escape of airborne sound except of the tool exit opening (12) and connections (15-17) of the air guiding devices, wherein sound absorbing and/or insulating means are provided between each connection (15-17) of the air guiding devices and the surroundings (22) of the chip suction housing (11), and **in that** a holding down ring (23) is arranged at the outside of the chip suction housing (11) around the tool exit opening (12), via which the chip suction housing, in processing the work piece (2), (11) is two-dimensionally supported at the surface (13) of the work piece (2).

2. Milling machine according to claim 1, **characterized in that** a circumferential supporting surface (24) of the holding down ring (23) has a width of at least 10 mm, preferably of at least 30 mm.

3. Milling machine according to claim 1 or 2, **characterized in that** the supporting area (24) is a polished high grade steal surface.

4. Milling machine according to any of the claims 1 to 3, **characterized in that** the supporting surface (24), in processing the work piece (2), is supported at the surface (13) of the work piece (2) via a film of pressurized fluid.

5. Milling machine according to claim 4, **characterized in that** the film of pressurized fluid is built up via single local through holds (27) in the supporting surface (24) through which the fluid emerges out of the supporting surface (24) of the holding down ring (23).

6. Milling machine according to claim 4 or 5, **characterized in that** the air guiding devices, in processing the work piece (2), at least partially suck off the film into the chip suction chamber (14).

7. Milling machine according to any of the claims 1 to 6, **characterized in that** the holding down ring (23) is floating in the chip suction housing (11).

8. Milling machine according to any of the claims 1 to 7, **characterized in that** the holding down ring (23), in its boundary area, or an adjacent area of the chip suction housing (11) slowly rises above the surface (13) of the work piece (2).

9. Milling machine according to any of the claims 1 to 8, **characterized in that** a supporting force of the holding down ring (23) at the surface (13) of the work piece (2) is defined by the mass of the chip suction housing (11) and/or the mass of a taring weight.

10. Milling machine according to any of the claims 1 to 9, **characterized in that** the tool spindle (6), in processing the work piece (2), is movable perpendicularly to the surface (13) of the work piece (2) within limits with regard to the chip suction housing (11) located on the surface (13) without the sealing of the chip suction chamber (14) getting lost.

11. Milling machine according to claim 10, **characterized in that** a noise control collar (18) is mounted to the tool spindle (6) from which a circumferential tongue (19) protrudes which engages a circumferential groove (20) in a vat (21) of the chip suction housing (11).

12. Milling machine according to any of the claims 1 to 11, **characterized in that** the air guiding devices comprise a pressurized air line connected in the area of the tool exit opening (12) to blow out a lubricating and cooling mist onto the tool (3).

13. Milling machine according to any of the claims 1 to 12, **characterized in that** the air guiding devices comprise a suction line connected to the chip suction chamber (14) in the area of its maximum diameter.

14. Milling machine according to any of the claims 1 to 13, **characterized in that** the sound absorbing and/or insulating means comprise a sound absorber and/or an air intake and/or offtake at a location at a distance to the surroundings of the chip suction housing (22).

15. Milling machine according to any of the claims 1 to 14, **characterized in that** a circumferential pressure hose (19) is arranged at the outer circumference of the chip suction housing (11), wherein a pressure sensor is provided for an increased pressure due to a compression of the pressure hose (29).

## Revendications

1. Fraiseuse (1) avec un boîtier pour l'aspiration de copeaux (11) définissant à son intérieur une chambre pour l'aspiration de copeaux (14), avec une broche porte-outil (6) faisant saillie dans la chambre pour l'aspiration de copeaux (14) et avec des dispositifs de canalisation d'air raccordés à la chambre pour l'aspiration de copeaux (14), dans laquelle un mandrin de serrage (5) pouvant être entraîné en rotation est prévu à l'extrémité libre de la broche porte-outil (6) pour un outil (3) d'enlèvement de copeaux, le mandrin faisant saillie lors de l'usinage d'une pièce à travailler (2) à travers une ouverture de sortie d'outil (12) au-delà du boîtier pour l'aspiration de copeaux (11), dans laquelle le boîtier pour l'aspiration de copeaux (11) lors de l'usinage de la pièce à travailler (2) est disposé sur une surface (13) de la pièce à travailler (2) et peut être déplacé en conjonction avec la broche porte-outil (6) sur la surface (13), et dans laquelle les dispositifs de canalisation d'air lors de l'usinage de la pièce à travailler (2) provoquent un courant d'air à travers la chambre pour l'aspiration de copeaux (14) qui évacue des copeaux enlevés par l'outil (3) à travers la chambre pour l'aspiration de copeaux (14), **caractérisée en ce que** la chambre pour l'aspiration de copeaux (14) lors de l'usinage de la pièce à travailler (2) est scellée à l'exception de l'ouverture de sortie d'outil (12) et des raccords (15 à 17) des dispositifs de canalisation d'air contre la sortie de bruit aérien, dans laquelle entre chaque raccord (15 à 17) des dispositifs de canalisation d'air et l'environnement (22) du boîtier pour l'aspiration de copeaux (11) des moyens amortissant le bruit et/ou insonorisants sont disposés, et **en ce que** sur la face extérieure du boîtier pour l'aspiration de copeaux (11), une bague de retenue (23) est disposée autour de l'ouverture de sortie d'outil (12), par laquelle le boîtier pour l'aspiration de copeaux (11) prend appui de façon plane lors de l'usinage de la pièce à travailler (2) sur la surface de celle-ci.

2. Fraiseuse selon la revendication 1, **caractérisée en ce qu'**une surface d'appui circonférentielle (24) de la bague de retenue (23) présente une largeur d'au moins 10 mm, de préférence d'au moins 30 mm.

3. Fraiseuse selon la revendication 1 ou 2, **caractérisée en ce que** la surface d'appui (24) est une surface en acier spécial poli.

4. Fraiseuse selon l'une quelconque des revendications 1 à 3, **caractérisée en ce que** la surface d'appui (24) lors de l'usinage de la pièce à travailler (2) prend appui sur la surface (13) de celle-ci par l'intermédiaire d'une pellicule de fluide sous pression.

5. Fraiseuse selon la revendication 4, **caractérisée en ce que** la pellicule de fluide sous pression est créée par des passages locaux (27) individuels dans la surface d'appui (24) par lesquels le fluide sort de la surface d'appui (24) de la bague de retenue (23).

6. Fraiseuse selon la revendication 4 ou 5, **caractérisée en ce que** les dispositifs de canalisation d'air aspirent la pellicule lors de l'usinage de la pièce à travailler (2) au moins en partie dans la chambre pour l'aspiration de copeaux (14).

7. Fraiseuse selon l'une quelconque des revendications 1 à 6, **caractérisée en ce que** la bague de retenue (23) est logée de façon flottante sur le boîtier pour l'aspiration de copeaux (11).

8. Fraiseuse selon l'une quelconque des revendications 1 à 7, **caractérisée en ce que** la bague de retenue (23) monte faiblement dans sa zone circonférentielle ou une zone adjacente du boîtier pour l'aspiration de copeaux (11) par rapport à la surface (13) de la pièce à travailler (2).

9. Fraiseuse selon l'une quelconque des revendications 1 à 8, **caractérisée en ce qu'**une force d'appui de la bague de retenue (23) à la surface (13) de la pièce à travailler (2) est définie par la masse du boîtier pour l'aspiration de copeaux (11) et/ ou la masse d'un poids de tarage.

10. Fraiseuse selon l'une quelconque des revendications 1 à 9, **caractérisée en ce que** la broche porte-outil (6) peut être déplacée lors de l'usinage de la pièce à travailler (2) verticalement par rapport à la surface (13) de la pièce à travailler (2) en étant limitée par rapport au boîtier pour l'aspiration de copeaux (11) disposé sur la surface (13) sans perte de l'étanchéité de la chambre pour l'aspiration de copeaux (14).

11. Fraiseuse selon la revendication 10, **caractérisée en ce que** sur la broche porte-outil (6), une collerette d'isolation acoustique (18) est logée à partir de laquelle une languette circonférentielle (19) fait saillie qui s'engage dans une rainure circonférentielle (20) dans une cuve (21) du boîtier pour l'aspiration de copeaux (11).

12. Fraiseuse selon l'une quelconque des revendications 1 à 11, **caractérisée en ce que** les dispositifs de canalisation d'air comprennent une conduite d'air comprimé raccordée au niveau de l'ouverture de sortie d'outil (12) pour souffler un brouillard de lubrification et de refroidissement sur l'outil (3).

13. Fraiseuse selon l'une quelconque des revendications 1 à 12, **caractérisée en ce que** les dispositifs de canalisation d'air comprennent une conduite d'aspiration raccordée au niveau de son plus grand diamètre à la chambre pour l'aspiration de copeaux (14).

14. Fraiseuse selon l'une quelconque des revendications 1 à 13, **caractérisée en ce que** les moyens amortissant le bruit et/ou insonorisants comprennent un amortisseur de bruit et/ ou un dispositif d'aspiration d'air et/ou un dispositif d'expulsion d'air à un endroit éloigné de l'environnement du boîtier pour l'aspiration de copeaux (22).

15. Fraiseuse selon l'une quelconque des revendications 1 à 14, **caractérisée en ce que** sur la circonférence extérieure du boîtier pour l'aspiration de copeaux (11), un tuyau résistant à la pression circonférentiel (29) est disposé, un capteur de pression étant prévu pour une montée en pression due à une compression du tuyau résistant à la pression (29).
